# EUROPEAN PATENT APPLICATION

(11) **EP 3 647 933 A1**
(43) Date of publication of application: **06.05.2020**
(21) Application number: 18204416.4
(22) Date of filing: 05.11.2018
(51) Int. Cl.: G06F 3/12

(54) **PRINT PRODUCTION ENVIRONMENT CONTROLLER AND METHOD FOR LOCATING PRINT JOBS IN A PRINTED STACK**

(71) Applicant: Canon Production Printing Holding B.V., 5914 CA Venlo (NL)
(72) Inventor: VERHAAG, Franciscus J., 5914 CA Venlo (NL); VAN RIJT, Christianus J.M.G., 5914 CA Venlo (NL); FOEDERER, Johannes P.A., 5914 CA Venlo (NL); VERHOFSTAD, Wilhelmus J.E.G., 5914 CA Venlo (NL)
(74) Representative: Canon Production Printing IP Department

(57) **Abstract**

Print production environment controller and method for finding print jobs in a printed stack in a print production environment. An exterior of a virtual stack of printed print jobs by a printing system are compared with a digital image of the exterior of the printed stack.

## Description

### FIELD OF THE INVENTION

The present invention relates to a print production environment controller for controlling a plurality of printing systems in a print production environment comprising the print production environment controller.

In a print production environment the production of a print job can be managed at a printing system comprising a software system that handles the image data to be printed according to specifications of the print job, schedules the actions to be performed by operators and provides status feedback on the production progress to the production manager and - for example through the internet - to the end customers. The software system may be installed at the printing system or on a computer system connected to the printing system.

The print product, being an end product of the print job, may be a stack of paper or a stack of at least one document on any other media type. Specifications of the print job, such as content to be printed, a number of sets, jogging details, separation sheets between sets, job summary sheet, properties of the used media, are submitted by means of a product order or job ticket to the printing system. The print job specifications are interpreted by the printing system before the production of the print job starts. The print job specifications comprise printing specifications for the printing system, finishing specifications for finishing modules coupled to or in the printing system, and media specifications for the media to be printed upon. The print job may be printed on media from an input holder of a printer being part of the printing system and the printed media may be finished with finishing equipment being part of the printing system. The finishing steps may be part of the sequence of production steps which lead to the end product of the print job.

Print job content may hereinafter also be called print job data. Print job content may be text, digital images, tables, spreadsheets, icons, special characters, etc.

A user interface of the printing system may be a local user interface at the printing system, a remote user interface at a computer system like a personal computer, a laptop computer, a tablet computer, a personal digital assistant etc., connected via a network - wired or wireless - to the printing system, or a remote user interface at a mobile device connected via a network - wired or wireless, direct or indirect - to the printing system. The mobile device comprising the remote user interface may be a mobile phone, a smart phone, a tablet computer, a smart watch or smart glasses.

### BACKGROUND OF THE INVENTION

A print production environment with a plurality of printer systems nowadays produces a large amount of printed print jobs. Printed print jobs may be stacked in the printing system and ejected as a stack of printed print jobs, also called a printed stack.
An operator of the print production environment, a human being or a robot, may transport the printed stack from the printing system to another place in the print production environment. At any moment the print production environment may have a plurality of printed stacks. When the operator is requested an output of a certain print job, it may be hard for him to find the correct stack among the plurality of stacks. On the other hand when an operator encounters an arbitrary printed stack in the print production environment he wants to know which print jobs are comprised in said printed stack.

It is an object of the invention to locate or find a print job in a printed stack in the print production environment in a productive and structured way.

### SUMMARY OF THE INVENTION

According to the present invention this object is achieved by the print production environment controller connected to an image registration system connected to the print production environment controller, the print production environment controller being configured to receive print job specifications and print job content of print jobs printed by the plurality of printing systems, to derive from the received print job specifications and the print job content for each printing system of the plurality of printing systems a first visualization of an exterior of a virtual stack comprising the print jobs printed by the printing system until a current time, the image registration system being configured to register a printed stack into a stack image, the image registration system comprising a position detector for determining a stack position of the printed stack, the image registration system configured to send the stack image and the corresponding stack position determined by the position detector to the print production environment controller, wherein the print production environment controller is configured to receive the stack image and the corresponding stack position, and for each printed stack registered in the stack image, to establish a second visualization of an exterior of the registered printed stack,
for each first visualization,
to check if a part of the first visualization matches the second visualization, and in case of a positive outcome of the check, to establish at least one printed job comprised in a part of the virtual stack corresponding to the matched part of the first visualization, and to notify an operator that the at least one printed job is found in the printed stack at the corresponding stack position determined for the printed stack by the position localization device.

In case of a negative outcome of the check, the print production environment controller submit a notification for an operator of at least one of the printing systems.

The stack position is defined as a geographical position which may be determined by a GPS system, an NFC system, a bluetooth system, a local positioning system, etc. The geographical position may be specified in (X, Y) coordinates within a print production environment.

According to an embodiment the print production environment controller is configured to determine for the printed stack registered in the stack image, in case of a positive outcome of the check, a printed job position in the printed stack where to find the at least one printed job in the printed stack. The printed job position may be determined by a range of Z coordinates with respect to the top or the bottom of the printed stack.

According to an embodiment the print production environment controller is configured to derive from the print job specifications and the print job content of a printed job at least one characteristic of an exterior of a print job result corresponding to the printed job, the at least one characteristic being at least one out of a colour of the exterior of the print job result, a dimension size of the print job result, an outline of the print job result comprising deviations due to jogging of printed sets in the print job result or due to separation sheets.

According to an embodiment the print production environment controller is configured to concatenate the derived outline of the print job results into a virtual stack outline of the virtual stack, and to use the virtual stack outline in the step of, for each first visualization, checking if a part of the first visualization matches the second visualization.

According to an embodiment the print production environment controller is configured to use for the printed stack registered in the stack image the derived outline of the print job result according to the invention in the step of determining the position of the printed job in the printed stack according to the invention.

According to an embodiment the print production environment controller is configured to establish from the stack image a top view image of the printed stack, to compare the top view image with the content pages of the print jobs printed by the plurality of printing systems, and to identify the print job to which a page represented by the top view image belongs.

According to an embodiment the print production environment controller is configured to derive from the page represented by the top view image of the printed stack, the matched part of the first visualization, at least one dimension size of the printed stack, at least one dimension of the dimension sizes of the printed jobs in the registered printed stack, a position of said printed job in the registered printed stack. The position of said printed job in the registered printed stack may be determined by a height position in the registered printed stack.

According to an embodiment the print production environment controller is configured to receive a notification that a printed print job is removed from the printed stack resulting in a smaller printed stack, and to modify the virtual stack by deleting the print job related to the printed print job from the virtual stack. By doing so, the virtual stack is synchronized with the smaller printed stack.

According to an embodiment a printing system of the plurality of printing systems is provided with a jogging functionality of jogging over a number of distances and the print production environment controller is configured to receive for each printed job a jog sequence of jogging of the subsequent sets of the printed job, to concatenate the job sequences of the printed jobs into an overall jog sequence corresponding to the virtual stack of the printed jobs, to derive from a stack image a stack jog sequence of jogging of the printed jobs in the printed stack corresponding to the stack image, and to compare the overall jog sequence with the stack jog sequence in order to find at least one print job in the printed stack.

According to an embodiment a printing system of the plurality of printing systems is provided with a stacker and the print production environment controller is configured to receive a notification of an ejection of a stack by the stacker of the printing system and to add stack boundary items representing the boundaries of the ejected stack to the first visualization of the exterior of the virtual stack. The boundaries in a height direction are most meaningful.

The invention also relates to a method for identifying a print job in a print production environment comprising a plurality of printing systems, a print production environment controller and an image registration system connected to the print production environment controller, the method comprising the steps of the print production environment controller receiving print job specifications and print job content of print jobs printed by the plurality of printing systems, deriving from the received print job specifications and the print job content for each printing system of the plurailty of printing systems a first visualization of an exterior of a virtual stack comprising the print jobs printed by the printing system until a current time, the image registering system registering a printed stack into a stack image, and determining a stack position of the printed stack by means of a position localization device comprised in the image registration system, sending the stack image and the stack position to the print production environment controller, the print production environment controller receiving the stack image and the stack position, and estabishing a second visualization of an exterior of the registered printed stack, for each first visualization, checking if a part of the first visualization matches the second visualization, and in case of a positive outcome of the check, establishing at least one printed job comprised in a part of the virtual stack corresponding to the matched part of the first visualization, and notifying an operator that the at least one printed job is found in the printed stack at the corresponding stack position. In case of a negative the operator is notified that the at least one printed jobs is not found in the printed stack.

The invention also relates to a non-transitory recording medium comprising computer executable program code configured to instruct a computer to perform a method according to the invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
- Fig. 1: is a print production environment comprising a print production environment controller and an image registration device according to the invention;
- Fig. 2: shows a print queue history according to the invention;
- Fig. 3: shows a virtual stack of the print job queue history according to the invention;
- Fig. 4: shows a stack image made by the image registration device according to the invention; and
- Fig. 5: shows an outline of the virtual stack According to the invention;
- Fig. 6: shows a match of a part of the virtual stack outline shown in Fig. 5 with the outline of the stack image shown in Fig. 4;
- Fig. 7: shows a stack image comprising a front side of a printed stack and a top side of the printed stack;
- Fig. 8: shows a modified virtual stack;
- Fig. 9: shows another example of a print queue history according to the invention;
- Fig. 10: shows a virtual stack corresponding to Fig. 9; and
- Fig. 11-12: is a diagram of an embodiment of the method according to the invention.

### DETAILED DESCRIPTION OF EMBODIMENTS

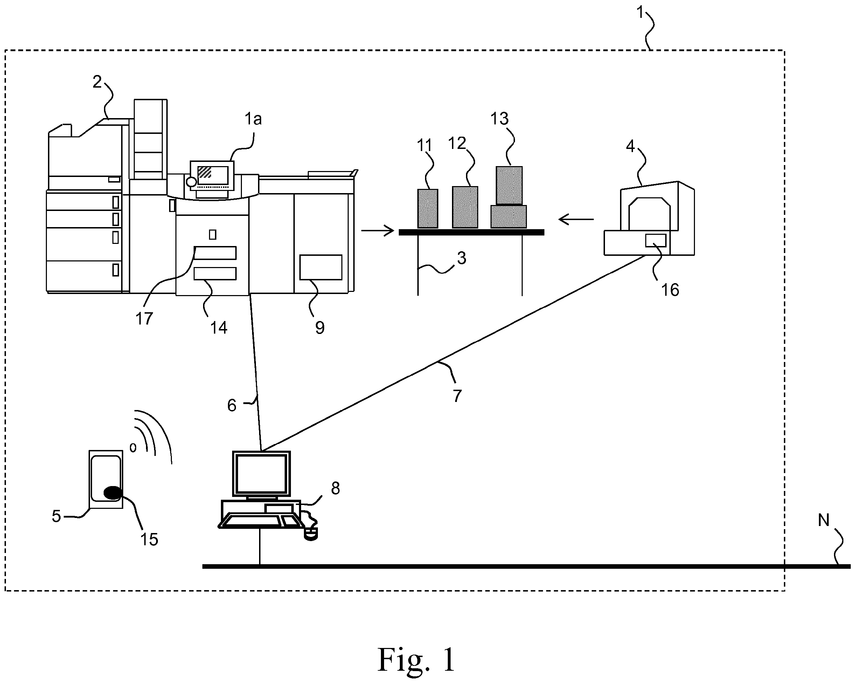

Fig. 1 is a print production environment 1 comprising a workstation 8 which may be a personal computer or another device for preparing print jobs and corresponding image data for prints to be printed. The workstation 8 acts as the print production environment controller according to the invention. The workstation 8 has access to a network N for receiving the image data. The workstation 8 as an image processing component for realizing the first visualization of an exterior of a virtual stack, a second visualization of an exterior of a registered stack image and a match between the first visualization and the second visualization according to the invention.

The print production environment 1 comprises a plurality of printers, for example a first printer 2 and a second printer 4. More than two printers may be envisioned. The first printer 2 comprises a print controller 17 that is configured to receive print jobs for prints and make them ready for printing. The print controller 17 controls the printing process of the first printer 2. The printer 2 comprises a print engine 14 for applying recording material on media in order to print a print job on a media. The printers 2, 4 are connected to the workstation 8 via a network line 6, 7 respectively. The printer 2 may have a local user interface 1a for enabling an operator to enter or read information, like selections or instructions. The second printer 4 also comprises a print controller and a print engine (not shown). The second printer 4 may comprise a local user interface.

The print production environment 1 also comprises an image registration system 5, for example a mobile device which is wireless connected to the print production environment controller 8. The mobile device 5 is configured to make pictures of printed stacks 11, 12, 13 of media which are put on a table 3 after printing by the printers 2, 4. A picture of a printed stack is also called a stack image hereinafter. The stacks of media 11, 12, 13 are printed output from the printers 2, 4 in the print production environment 1. It is noted that the first printer 2 and the second printer 4 are arbitrarily selected and other printers may be envisioned which form a configurable plurality of printers in order to produce an end product from received print jobs.

As a starting point print job data and print job specifications are submitted to the printers 2, 4. The submission may take place from a workstation connected to the printers 2, 4 via the network N. The printers 2, 4 deliver a number of printed sheets which are stacked in output holders 9, 16 respectively. The sheets may be of a kind of media type with specific media properties as according to the print job specifications. Media properties may be colour, size, thickness, weight, transparency, kind of media material like paper, plastic, etc. The printed sheets are ejected to the output holders 9, 16 of the printers 2, 4. The printed stacks are taken out of the output holders 9, 16 by an operator - human or robot - in order to put them in a place in the print production environment 1, where the printed stacks are gathered for further distribution, for example a distribution table 3. On the distribution table 3 a plurality of printed stacks 11, 12, 13 may be gathered. The printed stacks 11, 12, 13 may have different sizes, heights, widths, lengths, colour. The printed stacks 11, 12, 13 may contain one or more printed print jobs or a part of a printed print job. The printed stacks may be jogged or may comprise separation sheets like coloured sheets. The separation sheets may be used to separate printed print jobs in the printed stack or even sets of one printed print job from each other. In this example the printed stacks 11 and 13 are printed by the first printer 2 while the printed stack 12 is printed by the second printer 4.

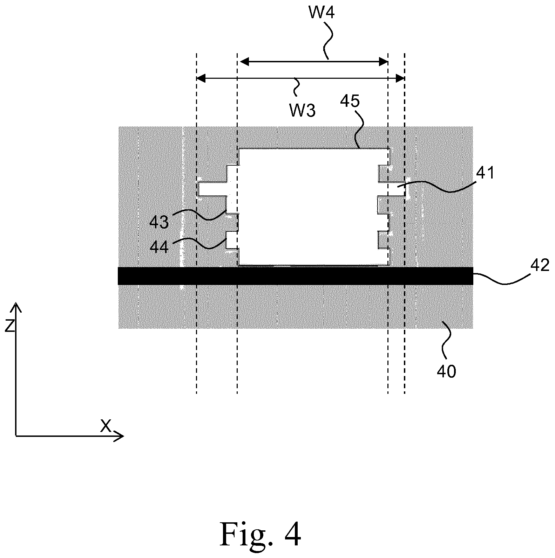

The image registration device 5 is configured to make digital stack images from the printed stacks. The stack images are further described in Fig. 4. The image registration device 5 comprises a camera and a position detector 15 for determining a stack position (X,Y) of the printed stack in the print production environment.

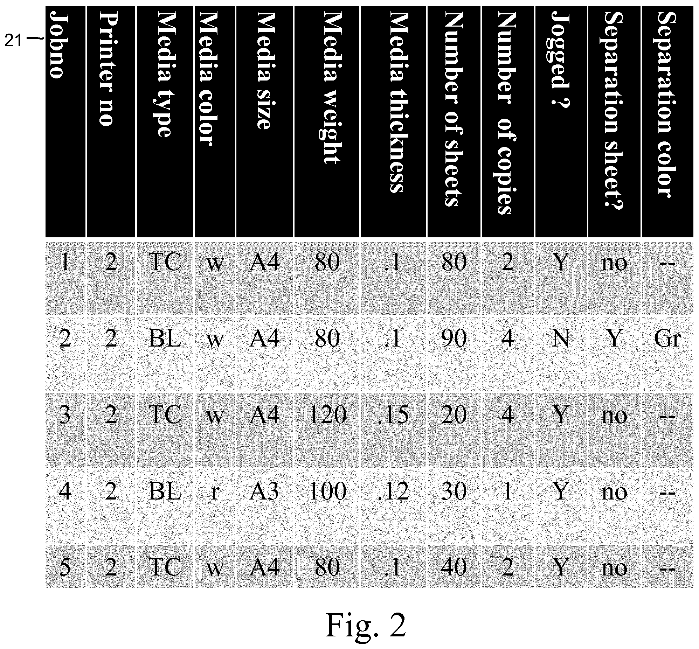

Fig. 2 shows an example of a print queue history list 21 of printer 2. The print queue history list 21 of printer 2 is an ordered list of print jobs which are already printed by the printer 2. The list 21 is ordered according to the respective print times of the print jobs. For each print job the list 21 of print jobs comprises print job specifications in combination with system settings which were applied during printing of the print job. The list 21 comprises a job identification like a job number, a printer identification number of the printer by which the print job is printed, at least one media type of the print job like a top colour (TC), a black label (BL), etc., a media colour like white (w), red (r), etc., a media size like A4, A3, B4, Letter, Legal, etc., a media weight like 80 gr/m², 120 gr/m², etc., a media thickness like 0.1 mm, 0.12 mm, etc., a number of sheets per copy to be derived from a simplex/duplex print job setting, a number of copies, a jogging indication whether or not the print job is jogged, i.e. alternatingly staggered laid off in the output holder 9, the presence of separation sheets between copies of the print job or between sets of a copy of the print job. In this case green (Gr) coloured separation sheets are specified for job number 2. Jogging is specified for job number 1, 3, 4, and 5.

The print production environment controller 8 is configured to receive the print queue history list 21 from the first printer 2. The reception of the list 21 may be once in a predetermined time or continuously with respect to each print ready signal of a print job by the first printer 2 on a job-by-job basis. The list 21 is stored in storage of the print production environment controller 8.
The print production environment controller 8 also received a print queue history list from printer 4 (not shown).

The print production environment controller 8 is also configured to receive print job content of print jobs 1 - 5 as shown in the list 21.

From the received print queue history list 21 and the print job content of the print jobs 1 - 5 which have been printed on the first printer 2, the print production environment controller 8 derives a first visualization of an exterior of a virtual stack comprising the print jobs 1 - 5 printed by the first printer 2 until a current time, i.e. for example now.

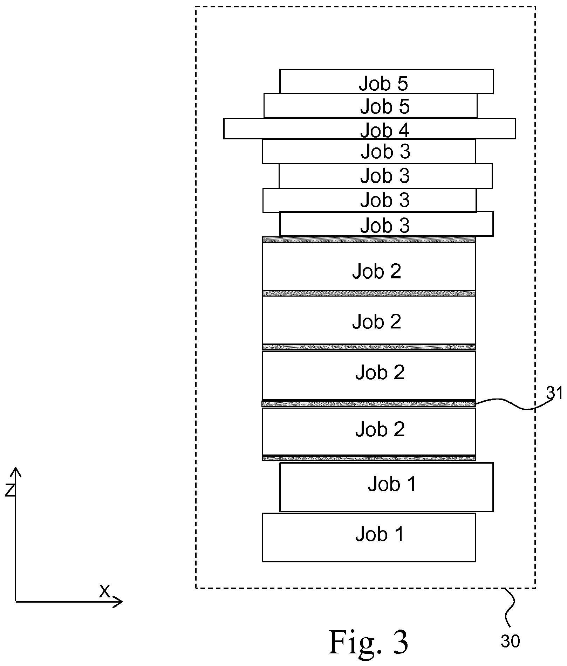

Fig. 3 shows a virtual stack 30 derived from the print job queue history list 21 in Fig. 2 and the print job content according to the present invention. The virtual stack is constructed for two spatial dimensions which are most likely to distinguish print jobs from the virtual stack. In this example, an X direction being one of the two flat dimensions of the table surface and also of the surface of the sheets in the printed jobs is taken together with the Z direction indicating a height of the virtual stack 30. Instead of the X direction or in addition to the X direction, a Y direction may be selected.

The media size, the media thickness, the number of sheets per copy, the number of copies, jogging between sets (copies) of the printed jobs 1, 2, 3 and 5 and separation sheets 31 - in this case green (Gr) coloured - of the printed job 4 are taken into account when drafting the virtual stack 30.
From the media thickness, the number of sheets per copy and the number of copies, a height of a printed job in the virtual stack 30 is derived. For example, the printed job number 1 in the virtual stack has in reality a height of 2 (the number of sets/copies for job 1) multiplied by 80 (the number of sheets for job 1) multiplied by 0.1 mm (the media thickness of job 1) being equal to a height of 16 cm in the Z direction.
A width of the printed job in the virtual stack 30 is derived from the media size. For example, job number 4 has an A3 media size which leads to a larger width for printed job number 4 in the virtual stack than the width of the job numbers 1, 2, 3 and 5 in the virtual stack which have an A4 media size.

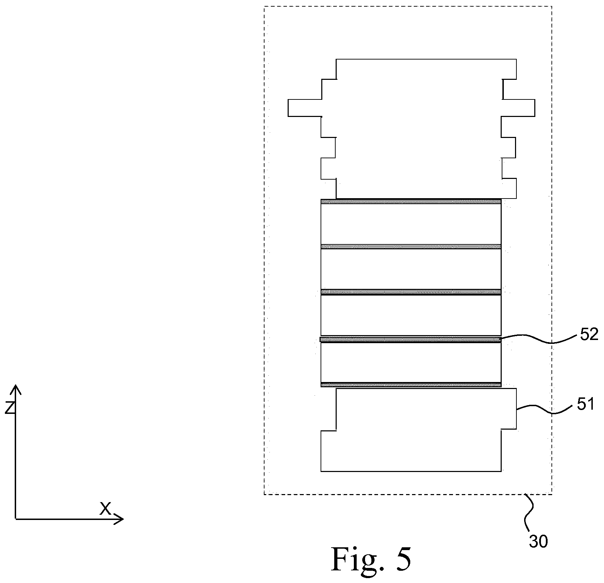

The print production environment controller is configured to concatenate the derived outline of the print job results into the virtual stack 30 and also in an outline of the virtual stack 30 which will be elucidated in Fig. 5.

The image registration system 5 in Fig. 1 is configured to register a printed stack 11, 12, 13 in the print production environment 1 in a stack image.

Fig. 4 shows an example of a stack image 40 registered by the image registration system 5. The stack image 40 represents the printed stack 11 shown in Fig. 1 in more detail. The position detector 15 of the image registration system 5 determines a (X, Y) stack position of the printed stack in the print production environment. For example coordinates of the distribution table 3 may be determined together with an (X,Y) position on the table 3.
The image registration system 5 sends the stack image 40 and the corresponding stack position determined by the position detector 15 to the print production environment controller 8. Stack image 40 shows only the printed stack 11, but stack images showing more than one printed stack may be envisioned.
The print production environment controller 8 receives the stack image 40 and the corresponding stack position, and establishes a second visualization of an exterior of the registered printed stack 11. If a stack image received by the print production environment controller 8 shows more than one printed stack, the print production environment controller 8 may distinguish the respective printed stacks in the stack image and proceed with each of the distinguished printed stacks.
The print production environment controller 8 analyses the stack image 40. For example an outline 45 of the printed stack is determined. The digital image representation 42 of the surface of the table 3 is discerned in the stack image 40.
In this example, widths of the sheets are discerned. A first width W4 is discerned and a deviating width W3 is discerned which is larger than the first width W4. Therefore it may be concluded that a media with a deviating width W3 is used for at least one job 41. Protrusions 43, 44 are discerned from which it is concluded that the printed stack 11 comprises at least one jogged print job. The number of protusions may also lead to a conclusion about the number of jogged sets of the at least one jogged print job.
Also the height of of each discernable block in the stack image 40, may lead to a conclusion about a height of the printed job or at least a ratio between heights of printed job in the printed stack.

Fig. 5 shows an outline 51 of the virtual stack 30 as constructed in Fig. 3. The outline 51 is merely a circumference of the virtual stack 30 in the X-Z dimensional plane. The outline 51 of the virtual stack 30 is mostly determined by the jogging criteria for the printed jobs in the virtual stack 30 and a determined height in the Z direction fo each printed job in the virtual stack 30.
The outline 51 may comprise also indication items 52 representing the coloured separation sheets 31 indicated in Fig. 3 in the virtual stack 30.

The print production environment controller 8 is configured to check if the stack image 40 in Fig. 4 matches a part of the virtual stack 30 shown in Fig. 3. The outline 45 of the stack image 40 may be compared with the outline 51 of the virtual stack 30 shown in Fig. 5. When a part of the virtual stack outline 51 is positively matched with the outline 45 of the stack image 40, the print production environment controller 8 is able to determine and identify the printed jobs which are included in the printed stack 11 shown in Fig. 1.

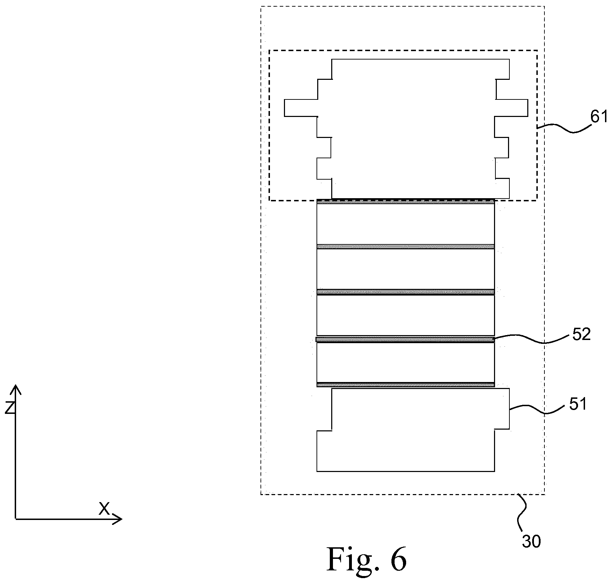

Fig. 6 shows a match of a part 61 of the virtual stack outline 51 with the outline 45 of the stack image 40 shown in Fig. 4. Now the printed jobs in the printed stack 11 corresponding to the stack image 40 are identified when looking at the virtual stack 30. The identified print jobs are the print jobs with job numbers 3, 4 and 5.
Since the position of the printed stack 11 in the print production environment 1 is also known from the information received from the image registration device 5 by the print production environment controller 8, an operator may be notified that at least one printed job - in this example the print jobs numbered 3, 4 and 5 - is found in the printed stack 11 at the corresponding stack position.

By further analysing the virtual stack 30, the print production environment controller 8 is also able to determine where to find the at least one identified printed job inside of the printed stack 11. In this example the printed job no 5 is to be found on top of the printed stack 11, the printed job no 4 below the printed job no 5 and the printed job no 3 below the printed job no 4 inside of the printed stack 11.

If a registered stack image shows a printed stack with coloured separation sheets, the virtual stack may be scanned for parts which show coloured separation sheets. According to Fig. 3, printed job numbered 2 has made use of separation sheets of one colour, i.e. green. Print job 2 may be discerned in the stack image by looking at the presence of green coloured separation sheets.

Moreover, if separation sheets of different colours are used to separate printed jobs or printed sets of a print job, the colours of the used separation sheets are shown in the virtual stack and may be compared to colours of separation sheets in the stack image. By doing so, the exact position of at least one print job which has used separation sheets may be pinpointed in the printed stack corresponding to the stack image.

For example, a first print job result in a printed stack may use blue coloured separation sheets while a second print job result in the same printed stack may use red coloured separation sheets.
For example, for each print job using separation sheets and having at least one printed set an order of the colours of the separation sheets inside of one print job may uniquely determine the presence of the print job in the printed stack shown in the stack image or even in a plurality of stack images.

If the print job comprises a coloured sheet in a set according to media specifications of the print job, the coloured sheet is visible in the printed stack. Since the print production environment controller also has knowledge about print job specifications, especially media specifications of the print job, the print production environment controller is able to calculate at what height in the printed set in the printed stack the coloured sheet should appear. The coloured sheet is detectable in the stack image of the printed stack and may also be taken into account when creating the virtual stack in which the print job is residing.

In general, any other deviation due to media specifications of the print job or finishing specifications of the print job may lead to an image artefact in the virtual stack as well as in the stack image. The image artefact in the stack image is detectable by the image processing component of the print production environment controller. For example, when each set of a number of sets of a printed job is stapled, an artefact on a front (X,Z) side of the printed stack is visible, since the staples lead to a larger Z height on one side of the stack in the X direction than on the other side of the stack in the X direction. Tab sheets or intermediate sheets in a print job having a larger size than other sheets of the print job may also be visible as protrusions out of the printed stack in the X direction. Folded sheets in a printed stack may also be visible in the stack image.

It may be evident that the virtual stack and the stack images may be compared independently of the scale at which the stack images are registered. By looking at the outlines of both the stack image and the virtual stack, automatic scaling may be applied by means of the image processing component in the print production environment controller 8 in order to match a part of the virtual stack with the stack image. Also a mirrored outline may be taken into account by the print production environment controller when the printed stack is turned 180 degrees in the (X,Y) plane.

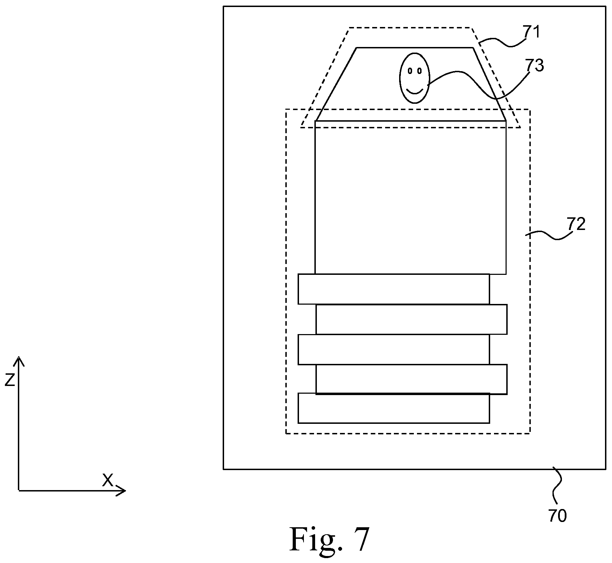

Fig. 7 shows a stack image 70 comprising a (X,Z) front side 72 of a printed stack and a (X,Y) top side 71 of a printed stack. The top side 71 shows a top view image 73 of the printed stack. According to an embodiment the print production environment controller 8 is configured to establish from the stack image 70 the top view image 73 of the printed stack by means fo the image processing component of the print production environment controller 8. The print production environment controller 8 may compare the top view image 73 with the content pages of the print jobs printed by the plurality of printing systems 2,4 in the print production environment 1, and to identify the print job to which the page represented by the top view image 73 belongs.
By further analysing the (X, Z) front side 72 of the printed stack, the print production environment controller 8 is able to determine which printed jobs are part of the printed stack corresponding with the stack image 70 as earlier described.

In an alternative embodiment the operator uses the image registration device 5 to create two stack images which together represent a printed stack. A first stack image may comprise for example the front side 72 of the printed stack and a second stack image may comprise the top side 71 of the printed stack. By doing so, it becomes easy to identify and compare the top view image 73 with the page contents of printed jobs registered in the virtual stacks of the printing systems 2, 4 in the print production environment 1.

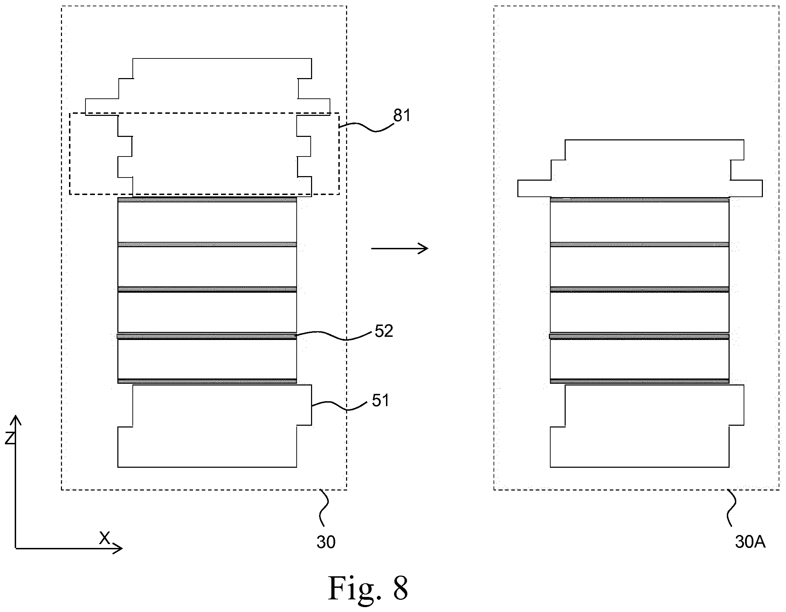

When at least one of the identified print jobs, for example job no 3, is removed from the printed stack 11 for further processing like finishing, packaging or expediting, the printed stack 11 is smaller in height in the Z direction after the removal of printed job no 3, but still and only contains the printed jobs 1, 2, 4 and 5. A position of the printed job no 3 is indicated by the dashed rectangle 81 in Fig. 8. The operator who removes the identified printed job 3 may send a notification from his image registration device 5 or any other personal electronic device - in a formalized format which is readable by the print production environment controller 8 - to the print production environment controller 8. According to an embodiment the print production environment controller 8 - upon receiving such a notification - modifies the virtual stack 30 by deleting the print job 3 from the virtual stack 30 resulting a modified virtual stack 30A shown in Fig. 8. By doing so, the virtual stack 30A is again in line with the actual remaining printed stack 11.

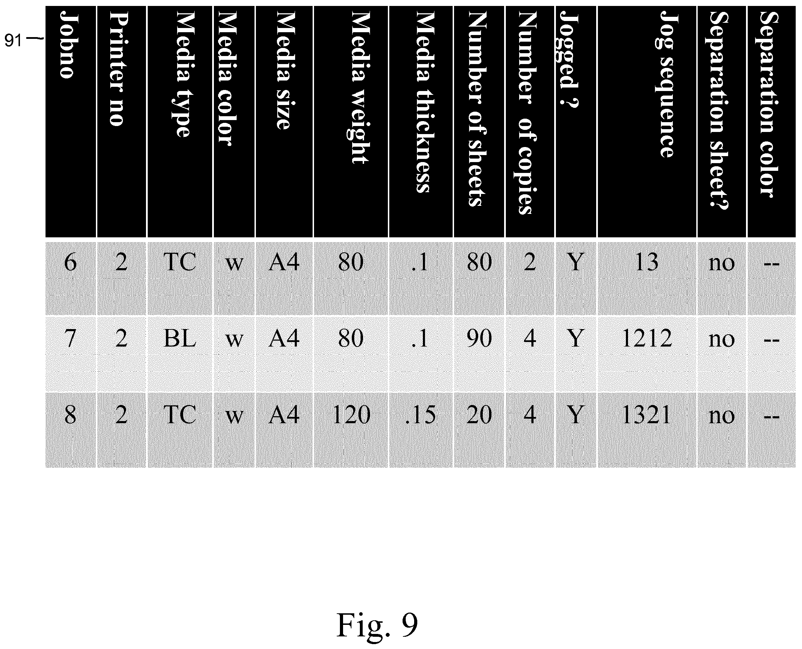

Fig. 9 shows an example of another print queue history list 91, for example of printer 2. The print queue history list 91 resembles the print queue history list 21 shown in Fig. 2, but has an additional column wherein a jog sequence is specified for each printed job 6, 7, 8.
According to the corresponding embodiment the printer 2 has a jogging capability of jogging over a number of distances with respect to a default position in the X direction and/or in the Y direction of lying off the sheets in the output holder 9 of the printer 2. Hereinafter jogging in the X direction is assumed. For example printer 2 may jog over a distance named "1", over a distance named "2" and over a distance named "3". Jogging over a distance named "1" means for example no jogging, i.e. the jogging distance is 0 mm. Jogging over a distance named "2" means for example jogging over a distance of 5 mm, i.e. the jogging distance is 5 mm. Jogging over a distance named "3" means for example jogging over a distance of 10 mm, i.e. the jogging distance is 10 mm.

The job sequences are applied during printing of the print jobs 6, 7, 8 which are all jogged. Printed job 6 is jogged per copy/set according to the job sequence 13. Printed job 7 is jogged per copy/set according to the job sequence 1212. Printed job 8 is jogged per copy/set according to the jog sequence 1321. The jog sequences will be explained hereinafter.

Printed job 6 has two sets/copies and has a jog sequence 13. The jog sequence 13 means that the first set of printed job 6 is jogged over a distance with distance name "1", i.e. the first set is not jogged, while the second set of printed job 6 is jogged over a distance with distance name "3", i.e. the second set is jogged over a distance of 10 mm.

Printed job 7 has four sets/copies and has a jog sequence 1212. The jog sequence 1212 means that the first set of printed job 7 is jogged over a distance with distance name "1", i.e. the first set is not jogged, the second set of printed job 7 is jogged over a distance with distance name "2", i.e. the second set is jogged over a distance of 5 mm., the third set of printed job 7 is jogged over a distance with distance name "1", i.e. the third set is not jogged, the fourth set of printed job 7 is jogged over a distance with distance name "2", i.e. the fourth set is jogged over a distance of 5 mm.

Printed job 8 has four sets/copies and has a jog sequence 1321. The jog sequence 1321 means that the first set of printed job 8 is jogged over a distance with distance name "1", i.e. the first set is not jogged, the second set of printed job 8 is jogged over a distance with distance name "3", i.e. the second set is jogged over a distance of 10 mm., the third set of printed job 8 is jogged over a distance with distance name "2", i.e. the third set is jogged over a distance of 5 mm., and the fourth set of printed job 8 is jogged over a distance with distance name "1", i.e. the fourth set is not jogged.

According to an embodiment the jog sequences are selected for subsequent print jobs scheduled for a printer from the plurality of printers in such a sequence order that a chance that more than one match is found is low, for example approximately zero. The jog sequences may be determined by a sequence determination component in the printing system(s) which takes history of jog sequences for already printed jobs into account.

For the complete print queue history list 91 an overall jog sequence may be determined to be a concatenation of the job sequences of the print jobs 6, 7 and 8, i.e. the overall jog sequence 1312121321.

The print production environment controller 8 is configured to receive the print queue history list 91 from the first printer 2.

The print production environment controller 8 is also configured to receive print job content of print jobs 6 - 8 as shown in the list 91.

From the received print queue history list 91 and the print job content of the print jobs 6 - 8 which have been printed on the first printer 2, the print production environment controller 8 derives a first visualization of an exterior of a virtual stack comprising the print jobs 6 - 8 printed by the first printer 2 until a current time, i.e. for example now.

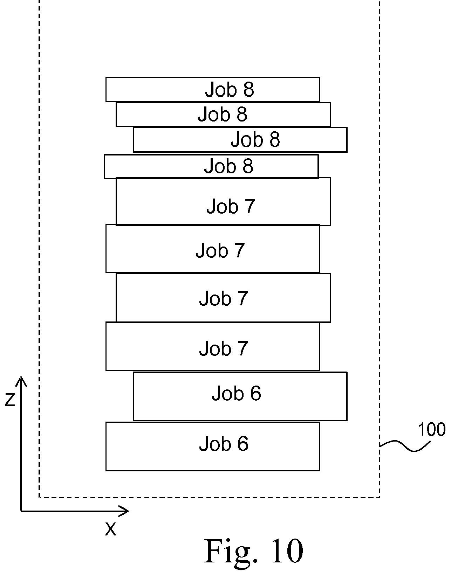

Fig. 10 shows a virtual stack 100 derived from the print job queue history list 91 in Fig. 9 and the print job content according to the present invention. The virtual stack 100 is constructed for two spatial dimensions which are most likely to distinguish print jobs from the virtual stack. In this example, an X direction being one of the two flat dimensions of the table surface and also of the surface of the sheets in the printed jobs is taken together with the Z direction indicating a height of the virtual stack 100.

The print production environment controller is configured to concatenate the derived outline of the print job results into the virtual stack 100 and also in an outline of the virtual stack 100 being similar to the outline 51 in Fig. 5 of the previous described virtual stack 30.

When a stack image is received from the image registration device 5 an outline of the printed stack shown in the stack image may be derived form the stack image as earlier described. From the outline of the printed stack a jog sequence may be derived. Suppose that the jog sequence which is derived from the stack image is for example 21213, then the position of this job sequence in the overall jog sequences of virtual stacks may be determined. In the case of the overall jog sequence 1312121321 corresponding to print queue history list 91, there is only one match with the jog sequence 21213, namely 1312121321.
This means that the printed stack comprises the second, third and fourth set of print job 7 and the first set and second set of print job 8.

According to an embodiment the second printer 4 in the print production environment 1 is provided with a stacker 16. The stacker 16 has the function of an output holder for holding a stack of printed jobs which are intended to be removed from the stacker 16 if the stacker is full. Upon such an ejection of a printed stack by the stacker 16, the printer 4 sends a notification to the print production environment controller 8. Upon receiving the notification of an ejection of a printed stack by the stacker 16 of the printer 4, the print production environment controller 8 adds stack boundary items representing the boundaries of the ejected stack to the first visualization of the exterior of the virtual stack corresponding to the printer 4.
By doing so, a printed stack can be easily distinguished in the virtual stack by looking at the stack boundary items and matched with a stack image.

The examples of print jobs, virtual stacks and stack images shown in Fig. 3 - 8 are exemplary for the invention, but other examples of print jobs, virtual stacks and stack images may be envisioned that vary with regard to the shape and size of the sheets, the content of the pages of the sheets, the jogging or use of separation sheets, the media colour of the sheets, the transparency of the sheets, the plexity of the print job meaning a simplex, duplex or mix-plex mode of the print job, the print job specifications, etc.

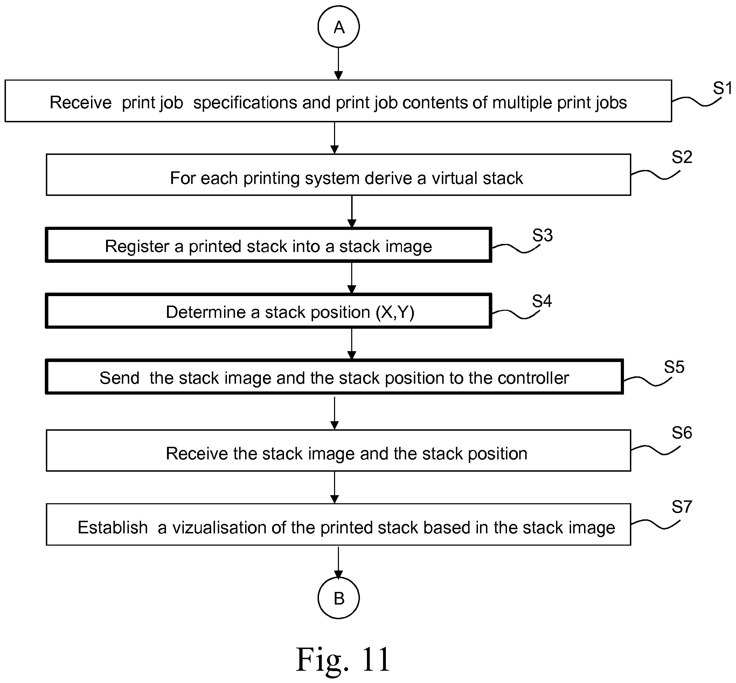

Fig. 11 - 12 describes a flow diagram of an embodiment of the method according to the invention. The method is suitable for identifying a print job in a print production environment comprising a plurality of printing systems. The print production environment controller is connected to an image registration system. Steps S1, S2, S6 - S13 in rectangles with a normal outline are performed by the print production environment controller. Steps S3, S4, S5 in rectangles with a bold outline are performed by the image registration system.

The method starts in a starting point A leading to a first step S1.

In the first step S1 the print production environment controller receives print job specifications and print job content of print jobs printed by the plurality of printing systems.

In a second step S2 the print production environment controller derives from the received print job specifications and the print job content for each printing system of the plurailty of printing systems a first visualization of an exterior of a virtual stack comprising the print jobs printed by the printing system until a current time. The image processing component of the print production environment controller is used to execute the second step S2.

In a third step S3 the image registration system registers a printed stack into a stack image. The camera of the image registeration system registers the printed stack.

In a fourth step S4 the image registration system determines a stack position of the printed stack by means of a position localization device comprised in the image registration system. The stack position may be (X,Y) coordinates from a GPS system, a local positioning system in the print production environment, etc.

In a fifth step S5 the image registration system sends the stack image and the stack position to the print production environment controller.

In a sixth step S6 the print production environment controller receives the stack image and the stack position.

In a seventh step S7 the print production environment controller estabishes a second visualization of an exterior of the registered printed stack. The image processing component of the print production environment controller is used to execute the seventh step S7.

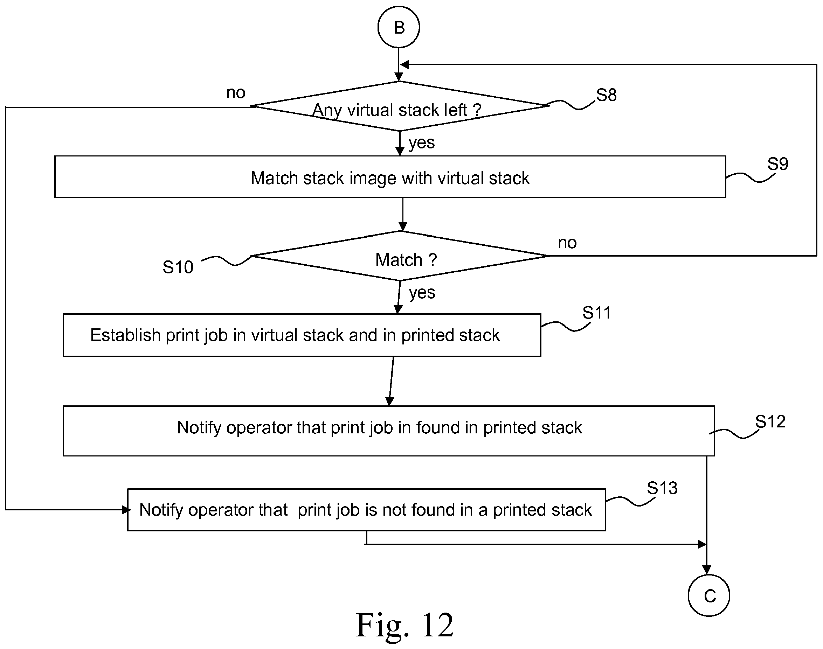

The method proceeds to an intermediate point B for connecting Fig. 11 and Fig. 12.

Intermediate point B leads to an eighth step S8.

In the eighth step S8 the first visualizations of the virtual stacks are iterated upon.

In a ninth step S9 the print production environment controller is matching the first visualization with the second visulaization. The image processing component of the print production environment controller is used to execute the ninth step S9.

In a tenth step S10 it is checked if there is a match of the first visualization with the second visualization.

In case of a match, the method proceeds with an eleventh step S11. In case of no match, the method returns to the eighth step S8.

In the eleventh step S11 the print production environment controller establishes at least one printed job comprised in a part of the virtual stack corresponding to the matched part of the first visualization.

In a twelfth step S12 the print production environment controller notifies an operator that the at least one printed job is found in the printed stack at the corresponding stack position. The notification may be issued to an operator owned communication device, for example the image registration device or any other mobile or immobile computer device hold by the operator.

In a thirteenth step S13 the operator is notified that the printed stack is not found in the virtual stacks corresponding to the printing systems in the print production environment.

The method ends in an end point C.

According to the embodiment of the method described here-above and shown in Fig. 11-12, the method stops with a notification when the printed stack is found in any virtual stack. However, according to other embodiments the method may be modified to find all matches in all virtual stacks. This is advantageous when multiple printers have produced a printed stack with the same outer characteristics and same content or when one printer has produced multiple printed stacks with the same outer characteristics and the same content.

The above disclosure is intended as merely exemplary, and not to limit the scope of the invention, which is to be determined by reference to the following claims.

## Claims

1. A print production environment controller for controlling a plurality of printing systems, the print production environment controller connected to an image registration system,
the print production environment controller being configured to receive print job specifications and print job content of print jobs printed by the plurality of printing systems, to derive from the received print job specifications and the print job content for each printing system of the plurailty of printing systems a first visualization of an exterior of a virtual stack comprising the print jobs printed by the printing system until a current time,
the image registration system being configured to register a printed stack into a stack image,
the image registration system comprising a position detector for determining a stack position of the printed stack,
the image registration system configured to send the stack image and the corresponding stack position determined by the position detector to the print production environment controller,
wherein
the print production environment controller is configured to receive the stack image and the corresponding stack position, and
for each printed stack registered in the stack image,
to establish a second visualization of an exterior of the registered printed stack,
for each first visualization,
to check if a part of the first visualization matches the second visualization, and
in case of a positive outcome of the check,
to establish at least one printed job comprised in a part of the virtual stack corresponding to the matched part of the first visualization, and
to notify an operator that the at least one printed job is found in the printed stack at the corresponding stack position determined for the printed stack by the position localization device.

2. A print production environment controller according to claim 1 wherein the print production environment controller is configured to determine for the printed stack registered in the stack image, in case of a positive outcome of the check, a printed job position in the printed stack where to find the at least one printed job in the printed stack.

3. A print production environment controller according to any of the claims 1 - 2, wherein the print production environment controller is configured to derive from the print job specifications and the print job content of a printed job at least one characteristic of an exterior of a print job result corresponding to the printed job, the at least one characteristic being at least one out of a colour of the exterior of the print job result, a dimension size of the print job result, an outline of the print job result comprising deviations due to jogging of printed sets in the print job result or due to separation sheets.

4. A print production environment controller according to claim 3, wherein the print production environment controller is configured to concatenate the derived outline of the print job results into a virtual stack outline of the virtual stack, and to use the virtual stack outline in the step of, for each first visualization, checking if a part of the first visualization matches the second visualization.

5. A print production environment controller according to claim 2 and 3, wherein the print production environment controller is configured to use for the printed stack registered in the stack image a derived outline of the print job result according to claim 3 in the step of determining the position of the printed job in the printed stack according to claim 2.

6. A print production environment controller according to any of the preceding claims, wherein the print production environment controller is configured to establish from the stack image a top view image of the printed stack, to compare the top view image with the content pages of the print jobs printed by the plurality of printing systems, and to identify the print job to which a page represented by the top view image belongs.

7. A print production environment controller according to claim 6, wherein the print production environment controller is configured to derive from the page represented by the top view image of the printed stack, the matched part of the first visualization, at least one dimension size of the printed stack, at least one dimension of the dimension sizes of the printed jobs in the registered printed stack, a position of said printed job in the registered printed stack.

8. A print production environment controller according to any of the preceding claims, wherein the print production environment controller is configured to receive a notification that a printed print job is removed from the printed stack resulting in a smaller printed stack, and to modify the virtual stack by deleting the print job related to the printed print job from the virtual stack.

9. A print production environment controller according to any of the preceding claims, wherein a printing system of the plurality of printing systems is provided with a jogging functionality of jogging over a number of distances and the print production environment controller is configured to receive for each printed job a jog sequence of jogging of the subsequent sets of the printed job, to concatenate the job sequences of the printed jobs into an overall jog sequence corresponding to the virtual stack of the printed jobs, to derive from a stack image a stack jog sequence of jogging of the printed jobs in the printed stack corresponding to the stack image, and to compare the overall jog sequence with the stack jog sequence in order to find at least one print job in the printed stack.

10. A print production environment controller according to any of the preceding claims, wherein a printing system of the plurality of printing systems is provided with a stacker and the print production environment controller being configured to receive a notification of an ejection of a stack by the stacker of the printing system and to add stack boundary items representing the boundaries of the ejected stack to the first visualization of the exterior of the virtual stack.

11. A method for identifying a print job in a print production environment comprising a plurality of printing systems, a print production environment controller and an image registration system connected to the print production environment controller, the method comprising the steps of
the print production environment controller
receiving print job specifications and print job content of print jobs printed by the plurality of printing systems,
deriving from the received print job specifications and the print job content for each printing system of the plurailty of printing systems a first visualization of an exterior of a virtual stack comprising the print jobs printed by the printing system until a current time,
the image registering system
registering a printed stack into a stack image, and
determining a stack position of the printed stack by means of a position localization device comprised in the image registration system,
sending the stack image and the stack position to the print production environment controller,
the print production environment controller
receiving the stack image and the stack position, and
estabishing a second visualization of an exterior of the registered printed stack, for each first visualization,
checking if a part of the first visualization matches the second visualization, and in case of a positive outcome of the check,
establishing at least one printed job comprised in a part of the virtual stack corresponding to the matched part of the first visualization, and
notifying an operator that the at least one printed job is found in the printed stack at the corresponding stack position.

12. A non-transitory recording medium comprising computer executable program code configured to instruct a computer to perform a method according to claim 11.
